# EUROPEAN PATENT SPECIFICATION

(11) **EP 3 183 959 B1**
(45) Date of publication and mention of the grant of the patent: **13.03.2019**
(21) Application number: 15202104.4
(22) Date of filing: 22.12.2015
(51) Int. Cl.: A01K 73/045, B63B 21/66

(54) **A TRAWL DOOR WITH FLOW BOOSTER FOR INCREASED LIFT CAPACITY**
SCHLEPPNETZTÜR MIT STRÖMUNGSVERSTÄRKER FÜR ERHÖHTE HUBKAPAZITÄT
PORTE DE CHALUT AVEC ACCÉLÉRATEUR DE FLUX POUR UNE AUGMENTATION DE LA CAPACITÉ DE LEVAGE

(43) Date of publication of application: 28.06.2017
(73) Proprietor: Volu Ventis ApS, 8600 Silkeborg (DK); P/F Vónin, 530 Fuglafjørdur (FO)
(72) Inventor: Hjort, Søren, 8600 Silkeborg (DK)
(74) Representative: Zacco Denmark A/S

(56) References cited:
- DE-A1- 19 725 170
- GB-A- 801 878
- JP-U- S61 193 766
- US-A- 4 484 534
- US-A1- 2012 174 464

## Description

The present invention relates to a trawl door for use by trawl fishing.

### Background of the invention

Trawl doors are used pairwise as towed cable-connected elements between the vessel and the trawl. They act as wing sections, which provide outward directed lateral lift forces when towed through the water. These lateral forces open the trawl mouth laterally. Vertical opening of the trawl is normally enabled through use of buoyancy and gravity elements on the trawl itself.

Trawl doors have been used for many decades and were originally just flat plates with carefully positioned brackets and holes for cable attachment and adjustment options. Modern trawl doors are designed as wing sections with a predominantly - but not completely - constant cross section along the span. The "span" denotes the length of the trawl door, i.e. the vertical distance from lower endplate to upper endplate when employed for normal operation. The "chord" denotes the longest distance from front to rear in the horizontal cross-sectional plane when employed for normal operation. The span-to-chord ratio, also called the "aspect ratio", varies from close to unity for bottom trawl doors, over a span-to-chord ratio of 1.5-1.9 for semi-pelagic trawl doors, and up to approximately 3 for pelagic (mid-water) trawl doors.

In the plane perpendicular to the span direction, the 2-dimensional cross-section of modern trawl doors constitutes a multi-element hydrofoil configuration, made as an overlapping sequence of individual hydrofoils positioned one-behind-the-other to exploit the so-called flap-effect known from aerodynamic theory. The same kind of hydrofoil/airfoil positioning in an overlapping sequence is known from other fields of technology where very high lift forces are needed, in particular multi-element wings on commercial aircrafts, where a leading edge slat and two trailing edge flaps are extracted from the main wing during take-off and landing. Geometrically, the individual hydrofoils on modern trawl doors are most commonly curved flat plates - sometimes called one-sided hydrofoils, but can also be shaped as slender airfoils.

Modern trawl doors are designed and manufactured as a sequence of spanwise sections. The spanwise sections are connected by section endplates. An endplate is also applied to the upper and lower end of the trawl door. A small trawl door might consist of only one spanwise section with two endplates (one at each end). Larger trawl doors will consist of two spanwise sections with three endplates (one internal and one at each end), or three spanwise sections with four endplates (two internals and one at each end), or even more spanwise sections.

Very often, if there is more than just one spanwise section, the spanwise sections will not join the endplates perpendicularly, but with a slight skew angle such that a symmetric V-shape is achieved. If 180 degrees corresponds to a straight trawl door with no V-shape, then approximately 170 degrees V-shapes are commonly used, i.e. substantially straight trawl doors, but with a slight 10 degrees directional angling between the lower end section and the upper end section. When this angling is regarded as a "V", then the hydrodynamic suction side is always above the "V", and the hydrodynamic pressure side is always below the "V". The section endplates serve no hydrodynamic purpose, but add strength and stiffness to the trawl door, thereby securing structural integrity.

Often, the spanwise section hydrofoils are welded to the section endplates, but flanged solutions with bolted joints also exist. In addition to the section endplates, one, two or more structural stiffeners are often used in the interior part of each spanwise section. These structural stiffeners are co-planar with the section endplates, i.e. aligned with the flow, but with a smaller material thickness. The structural stiffeners support the spanwise section hydrofoils structurally and prevent them from buckling (also known as warping) under operating hydrodynamic loads.

The desired qualities of an operating trawl door are:
a) High lift force per area, i.e. high lift coefficient to efficiently spread a large trawl. The allowable size of the trawl door is limited due to weight and handling restrictions. A compact lift-generating trawl door will therefore be characterized by a large lift coefficient.
b) High lift-over-drag ratio. Minimizing drag reduces fuel consumption. It should be noted that the drag on a trawl door is the sum of viscous drag and pressure drag. The pressure drag is composed by
   1) the normal pressure integral from the flow passing the hydrofoil configuration, which is fairly constant at incidence angles up to 30-40 degrees. At higher incidence angles above 40 degrees, stall will occur, thereby increasing the pressure drag abruptly, and
   2) the induced drag from the spanwise ends of the trawl door. Since the span-to-chord ratio, also called the "aspect ratio" of trawl doors is very low, 1.1-3.0, the vortices being shed from the tips (ends) create a proportionally large induced drag, which under normal operation conditions account for approximately 80 % of the total drag from a trawl door.
c) Dynamic stability of the trawl door under all operating conditions. Higher aspect ratio trawl doors have less induced drag coefficient, but are more prone to dynamic instability. Currently used aspect ratios ranging from 1.1 (bottom trawl door) to 3.0 (pelagic trawl door) therefore represent a compromise between dynamic stability and minimization of the induced drag.

It is a disadvantage of present-day trawl doors that higher lift coefficients have not been achieved. A lower lift coefficient must then be compensated for by increasing the planar area of the trawl door. The planar area is computed as the span times the chord. Large-area trawl doors are inconvenient due to increased cost, weight, and operational constraints such as available space on the rear part of the vessel's hull, which is the idle position for trawl doors.

Another disadvantage of present-day trawl doors is the fact that sensors for angular deflections, i.e. roll, pitch, and yaw, sensors for measuring distance between the two trawl doors while operating, and optionally sensors for measuring the vertical distance to the seabed are all positioned adjacent to the hydrodynamic surfaces in such a way that they inevitably partly block the fluid flow, thereby reducing the lift capacity and increasing drag.

US 2012/174464 A1 discloses an example of a trawl door as known in the art, which is considered to be relatively efficient.

### Brief description of the invention

An object of the invention is to provide a solution overcoming some of the disadvantages of the solutions known in the art as described above. This is achieved by using an advantageous technique for increasing lift, lift-over-drag, dynamic stability and creating available cavity space within a trawl door.

The invention exploits a new aerodynamic feature, a flow booster, which increases the speed-up of the flow over the suction side of the trawl door, thereby generating more lift force per area. The invention further introduces the use of the internal flow booster cavity for improving the dynamic stability of the trawl door and for allocating space for technical equipment.

The present invention relates to a trawl door comprising the technical features of independent claim 1.

The flow booster of to the present invention is conceptually comparable to an engine turbo charger, where the engine intake air has been pre-compressed, such that engine compression is increased and the mechanical work delivered by the combustion process through the work cycle is augmented. The function of the flow booster is to act as an obstruction to the flow on the pressure side of the conventional trawl door sequence of hydrofoils and geometrically create a main inlet narrowing channel, the so-called flow-boosted region, through which the flow will be guided. Further into the main inlet channel, the flow will branch into the several narrowing channels of the conventional trawl door. A fluid particle passing the trawl door will therefore experience an initial pre-speed-up in the flow-boosted region due to the flow booster, and then final speed-up when passing one of the narrowing channels of the conventional trawl door. Upon each speed-up stage, pressure will decrease in accordance with Bernoulli's formula stating that an increase in the speed of the fluid occurs simultaneously with a decrease in pressure and in which a change of pressure scales with the square of the velocity change. Therefore, a higher overall speed-up of the fluid over and across the trawl door will lead to a higher pressure difference between the lower pressure side and the upper suction side and consequently to a higher lift coefficient and lift force. A lift coefficient increase of more than 25 % compared to the conventional multi-element trawl door can be achieved with the addition of a flow booster.

The use of a thick, very thick or even blunt body to facilitate an initial speed-up of the flow in other aerodynamic high-lift applications has found very little use, if any.

It should be noted that the term "leading edge" is to be understood as the point at the front of a hydrofoil that has maximum curvature, and that the term "trailing edge" is to be understood as the sharp edge point at the rear of a hydrofoil that has maximum curvature. In the special case of a "blunt" or "truncated" trailing edge, the trailing edge point is to be understood as the midpoint between the upper and the lower end of the trailing edge truncation line.

It should also be noticed that the terms "front", "rear", "upper side", "lower side", "above", and "below" refer to the cross-sectional views of the trawl door with flow booster. The reference for these positional terms is the trawl door chord line defined as the imaginary connecting line between its start at the leading edge of the hydrofoil farthest away from the flow booster and its end at the trailing edge farthest away from that leading edge. Said trailing edge will typically be the trailing edge of the flow booster, but could also be the trailing edge of the rear-most conventional hydrofoil. "Front" indicates the direction parallel to the trawl door chord line towards the start thereof and "rear" indicates the direction parallel to the trawl door chord line towards the end thereof. The remaining positional terms relate to the perpendicular direction, i.e. the direction of the trawl door chord line rotated 90 degrees in the clockwise direction. "Upper" indicates the direction parallel to the rotated trawl door chord line towards the suction side and "lower" indicates the direction parallel to the rotated trawl door chord line towards the pressure side. "Above" and "below" also refer to the rotated chord line.

In an embodiment of the invention, the flow booster trailing edge is truncated.

A flow booster with a truncated trailing edge leads to a more compact trawl door geometry, which is advantageous for normal operation and handling on the trawler. A thick flow booster with a blunt trailing edge constitutes a bluff body traditionally associated with poor aerodynamic characteristics. However, the hydrodynamic function of the flow booster is not to act as a typical hydrofoil but primarily to facilitate a contraction of the flow in the main inlet, the boosted region, and secondarily to establish a converging channel flow between the upper side of the flow booster and the lower side of the rear-most of the hydrofoils in the conventional part of the trawl door.

In an embodiment of the invention, the relative thickness is larger than 35 %, such that the thick hydrofoil shape is not aerodynamically efficient regarded as an individual foil.

A very thick flow booster will be more effective in creating the main inlet boosted region, contributing to the pre-speed-up of the flow and the overall generation of a lift force. The drag force will increase insignificantly, since the total drag is clearly dominated by the induced drag from the tip-vortices at the spanwise ends for trawl doors with very low aspect ratios ranging from 1.1 to 3.0.

In an embodiment of the invention, a buoyancy element is positioned in the upper internal cavity.

A buoyancy element in the form of a sealed and structurally durable container of a low-density medium such as foam or air will contribute to the vertical stability of the trawl door. The large internal cavity volume of the flow booster makes it particularly attractive for placing a buoyancy element. By contrast, conventional trawl doors have no internal cavities and are therefore not well suited for placing buoyancy elements. In an embodiment of the invention, a gravity element is positioned in the lower internal cavity.

A gravity element in the form of a structurally durable container of a high-density medium such as for instance iron or rock will contribute to the vertical stability of the trawl door. The large internal cavity volume of the flow booster makes it particularly attractive for placing a gravity element. By contrast, conventional trawl doors have no internal cavities and are therefore not well suited for placing gravity elements.

The improved vertical stability of the trawl door through use of buoyancy and/or gravity elements in the booster cavity volume makes it possible to increase the trawl door aspect ratio, which, in turn, leads to both an increase of the lift coefficient and a decrease of the drag coefficient through reduction of the induced drag.

It should be noted that the terms "upper part" and "lower part" refer to the 3-dimensional views of the trawl door with flow booster in upright position during normal trawling operation, such that the "upper part" denotes the spanwise part closest to the sea surface and the "lower part" denotes the spanwise part closest to the seabed.

In an embodiment of the invention, technical equipment for control of the trawl door is positioned inside the internal cavity.

Equipment for trawl door stability control and directional control, sensors and/or equipment for communication with the towing trawler vessel occupies physical space and needs structural protection from the maritime environment. The large internal cavity volume of the flow booster is well suited to accommodate space and protection for such equipment.

In an embodiment of the invention, one or more spanwise section endplates connect on each side to a spanwise section, such that the spanwise sections are angled in relation to each other.

A flow booster with spanwise sections angled in relation to each other is advantageous for the same reasons that angled sections are advantageous for conventional trawl doors. The angling leads to improved vertical stability of the trawl door during operation in open waters. In the case of bottom trawl operation on the seabed, the angling will secure that the trawl door never falls over and lies flat on the bottom if the towing velocity drops to zero. Due to the angling, a fallen-over trawl door will reposition itself in an upright position once towing is resumed. Furthermore, an angle-sectioned trawl door fits better in its idle position on the aft of the trawler hull when towed in. The use of three or even four spanwise sections in the flow booster is advantageous for structural feasibility on large trawl doors. The benefit of using two anglings for three sections or three anglings for four sections is that all endplate interfaces will be alike and the cut rolled hydrofoil plates will be the same for each section. This facilitates a simplified manufacturing process

In an embodiment of the invention, the flow boosting part consists of the upper side of the flow booster only and a structurally less rigid material is used as volume fill below.

Material savings and cost-out can be obtained by omitting the metallic structural lower part of the flow booster. The flow booster outer geometry is then accomplished by attaching a correctly shaped volume fill element under the upper side of the flow booster. The volume fill can, for instance, be solid buoyancy material or a shell geometry.

In an embodiment of the invention, the flow boosting part consists of the lower side of the flow booster only and a structurally less rigid material is used as volume fill above. Attaching the volume fill above the metallic structural lower part of the flow booster is advantageous, since the structurally less durable volume fill becomes protected from mechanical abrasion, bumps and shocks from, e.g., the seabed and the vessel hull.

In an embodiment of the invention, the cross-sectional area of the flow booster is at least one order of magnitude larger than the cross-sectional areas of each of the hydrofoils of the conventional trawl door, the flow booster chord line distance is less than 80 %, preferably less than 65 %, of the overall trawl door chord line distance, and the several hydrofoils are one-sided.

One-sided hydrofoils as defined above are cheap and easy to manufacture compared to regular hydrofoils. Furthermore, at low trawling speeds, the ratio between inertia flow forces and viscous flow forces, the so-called Reynolds number, will decrease and cause a deterioration of regular hydrofoil efficiency. On the other hand, one-sided hydrofoils are less sensitive to these low Reynolds number effects.

In an embodiment of the invention, a keel is attached to the bottom of the trawl door for bottom trawling use on the seabed.

The force and stability benefits of the invention are relevant for trawling in open waters and bottom trawling as well. When used for bottom trawling, the trawl door with a flow booster preferably has a keel underneath the bottom section lower endplate to enable smooth traction over the seabed and provide protection from mechanical wear and tear.

In an embodiment of the invention, the trawl door is arranged so that the translational and/or angular position of the trawl door can be actively controlled from a towing vessel through use of pitching hydrodynamic surfaces, such as trawl door flaps or similar.

The positional controllability of a trawl door with a flow booster is valuable for easy vertical adjustment of the trawl, e.g., when locating the fish to be caught at a different depth than where the trawl is currently operating. Another example would be the deliberate and actively controlled positioning of a seabed operating trawl door a few meters above the bottom, serving the environmental purpose of not plowing a destructive groove through the seabed.

In an embodiment of the invention, the trawl door is arranged so that the dynamic stability of the trawl door can be actively controlled from a towing vessel through use of pitching hydrodynamic surfaces, such as trawl door flaps or similar.

Active stabilization of a trawl door will alleviate the need for common passive stabilization methods such as buoyancy and/or gravity elements, which leads to material and cost reductions. Active stabilization also enables use of a higher aspect ratio trawl door, since the improved dynamic stability relieves the need for maintaining a low aspect ratio.

In an embodiment of the invention, one or more of the hydrofoils of the trawl door are manufactured by moulding in a lightweight material such as plastic or rubber.

Trawl door weight savings are attractive from a cost perspective. Even if the replacement of steel by lightweight materials does not lead to cost reduction of the trawl door itself, the reduced gravity loading will still have a cost-positive impact on towing cables and motorized cable reels.

In an aspect of the invention, it relates to the use of a trawl door as described above for trawl fishing with a trawl net, as claimed in independent claim 15.

In an aspect of the invention, it relates to the use of a trawl door as described above for towing seismic equipment for seabed measurements for measuring the seabed composition, as claimed in independent claim 16.

The lateral spreading force delivered by a pair of hydrodynamic trawl doors with flow boosters can likewise be applied for effectively towing a seismic array of measurement instruments including sound emitters, sound recorders and more.

### Figures

A few exemplary embodiments of the invention are described in the following with reference to the figures, in which
- Fig. 1: illustrates a fishing trawler towing two trawl doors and a trawl as seen in perspective,
- Fig. 2: illustrates a present-day conventional trawl door as seen in perspective,
- Fig. 3: illustrates a trawl door with a flow booster as seen in perspective,
- Fig. 4: illustrates a cross section of a present-day conventional trawl door with streamline visualization,
- Fig. 5: illustrates a cross section of a trawl door with a flow booster with streamline visualization,
- Fig. 6: illustrates a cross section of a trawl door with a flow booster comprising a flow booster shaped like a thick hydrofoil and a conventional sequence of five thin hydrofoils,
- Fig. 7: illustrates a cross section of a trawl door with a flow booster comprising a flow booster shaped like a thick hydrofoil and a conventional sequence of three thin hydrofoils,
- Fig. 8: illustrates a cross section of a trawl door with a flow booster, comprising a flow booster shaped like a thick hydrofoil and a conventional sequence of five one-sided hydrofoils,
- Fig. 9: illustrates a cross section of a trawl door with a flow booster, comprising a flow booster shaped like a thick non-hydrodynamic bluff body and a conventional sequence of five one-sided hydrofoils,
- Fig. 10: illustrates the use of a thick non-hydrodynamic bluff body flow booster internal cavity as a buoyancy element increasing dynamic stability as seen in perspective,
- Fig. 11: illustrates the use of a thick non-hydrodynamic bluff body flow booster internal cavity as a gravity element increasing dynamic stability as seen in perspective,
- Fig. 12: illustrates the use of a thick non-hydrodynamic bluff body flow booster internal cavity as an applicable volume for technical equipment as seen in perspective,
- Fig. 13: illustrates a trawl door with a flow booster comprising two spanwise angled sections as seen in perspective,
- Fig. 14: illustrates a trawl door with a flow booster comprising three spanwise angled sections as seen in perspective,
- Fig. 15: illustrates a trawl door with a flow booster comprising four spanwise angled sections as seen in perspective,
- Fig. 16: illustrates a trawl door with spanwise tapered hydrofoils and with a flow booster comprising only two of the four spanwise angled sections as seen in perspective,
- Fig. 17: illustrates a cross section of a trawl door, wherein the flow boosting part consists of the upper side of the flow booster only and a structurally less rigid material is used as volume fill below,
- Fig. 18: illustrates a cross section of a trawl door, wherein the flow boosting part consists of the lower side of the flow booster only and a structurally less rigid material is used as volume fill above,
- Fig. 19: illustrates the use of a trawl door with a flow booster and a trawl door keel for use on the seabed (bottom trawl) as seen in perspective,
- Fig. 20: illustrates the use of a trawl door with a flow booster with actively individually controllable hydrodynamic flaps as seen in perspective, and
- Fig. 21: illustrates a vessel towing two trawl doors with a flow booster and an array of seismic equipment as seen in perspective.

### Detailed description of the invention

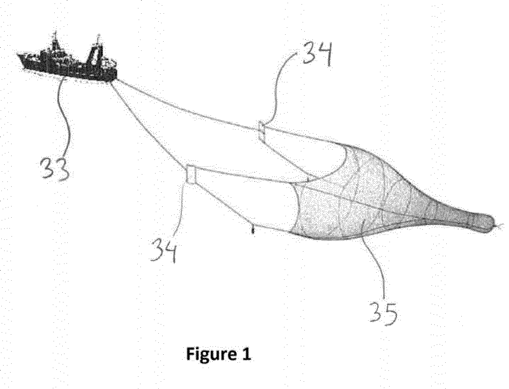

Fig. 1 illustrates a pair of trawl doors 34 in operation, being towed through the water by a towing vessel 33 and connected to a downstream trawl 35. Said pair of trawl doors 34 generate the hydrodynamic outwards directed lift forces that causes the lateral spread of the trawl 35. The magnitude of the lift forces determines how much spread can be achieved on the trawl 35. Trawl doors 34 with higher lift-generating capacity will therefore enable the use of a larger and more catch-efficient trawl 35.

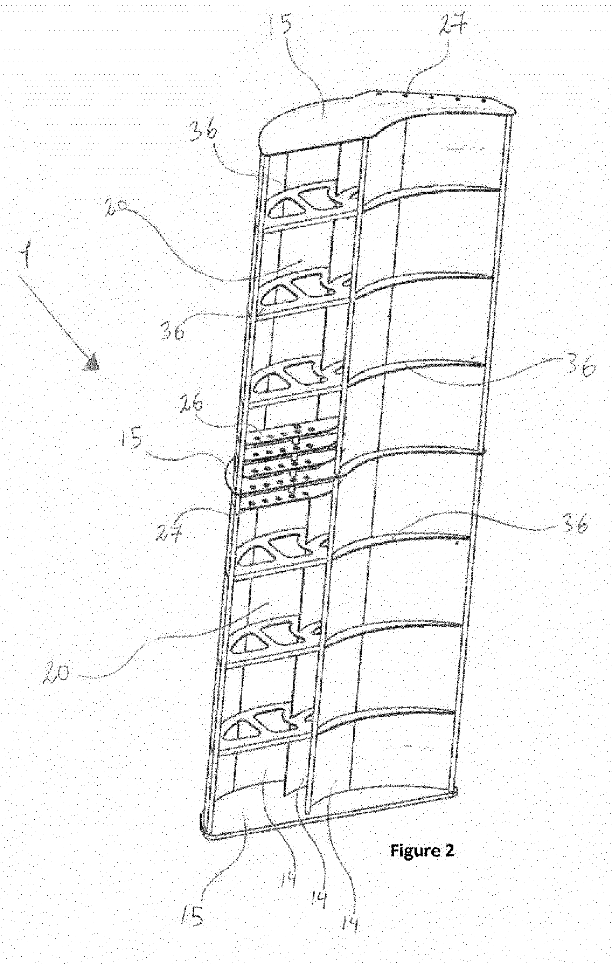

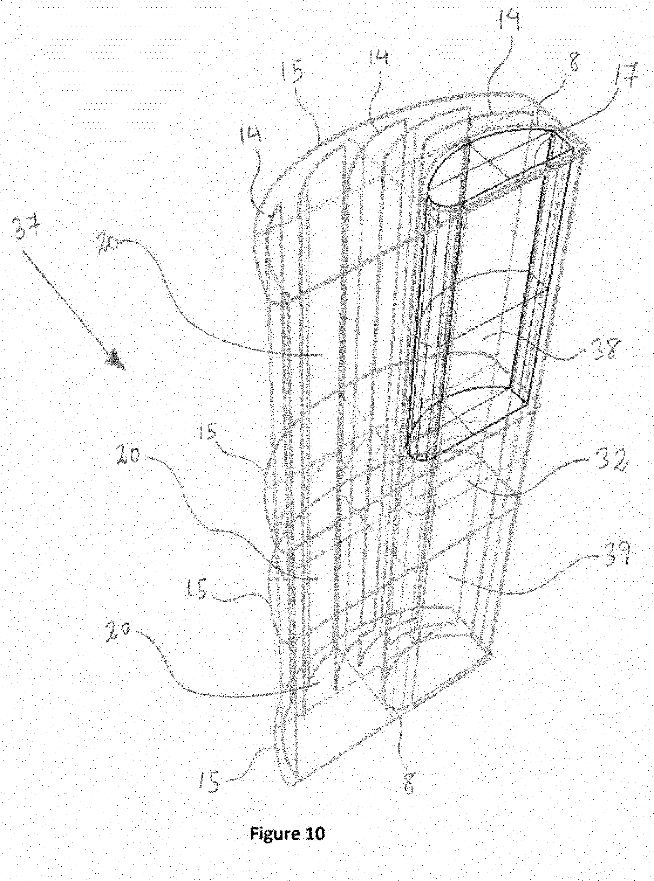

The present-day conventional trawl door 1 shown in fig. 2 is formed by a small number of spanwise sections 20 being separated by spanwise section endplates 15. Only two spanwise sections 20 are used in Fig. 2, but three, four, or even more spanwise sections 20 can be used as shown, for instance, in Figs. 10-12 and 14-16. Typically, three one-sided hydrofoils 14 are used to generate the lift forces during operation. Structural stiffeners 36 are typically used between the spanwise endplates 20 to provide the necessary structural stiffness needed to sustain all operational mechanical impact from the water, optionally the seabed, and the towing vessel. Attachment brackets 26 and attachment holes 27 for fastening the chains and towing cables are shown. The multitude of attachment brackets 26 and attachment holes 27 provides a means for adjusting the lateral angling between the trawl door 1 and the towing direction for controlling the lift force and a means for adjusting the vertical angling between the trawl door 1 and the towing direction for controlling the vertical position of the trawl door 1.

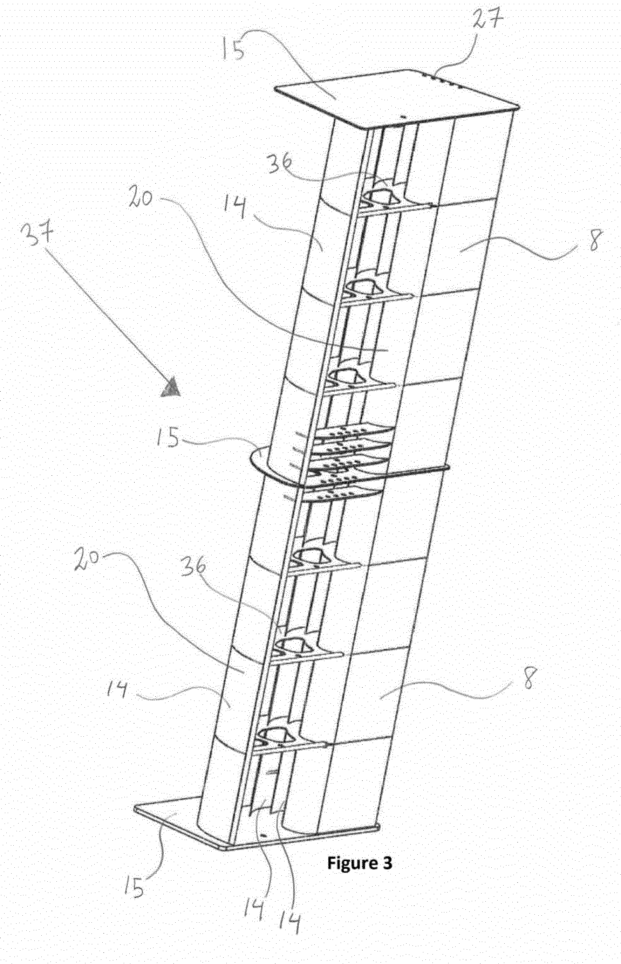

Fig. 3 illustrates a trawl door 37 with flow booster 8 as seen in perspective. The flow booster 8 disclosed in Fig. 3 is thick and acts as a hydrodynamic obstruction that guides the flow through the remaining conventional part of the trawl door. Said remaining conventional part of the trawl door comprises spanwise sections 20, spanwise section endplates 15, structural stiffeners 36, one-sided hydrofoils 14, attachment brackets 26 and attachment holes 27 similar to the one shown in Fig. 2. It should be noted that although the disclosed trawl door 37 with flow booster 8 has a constant cross-section, some degree of spanwise variation or tapering of the flow booster 8 and hydrofoils 14 can be used.

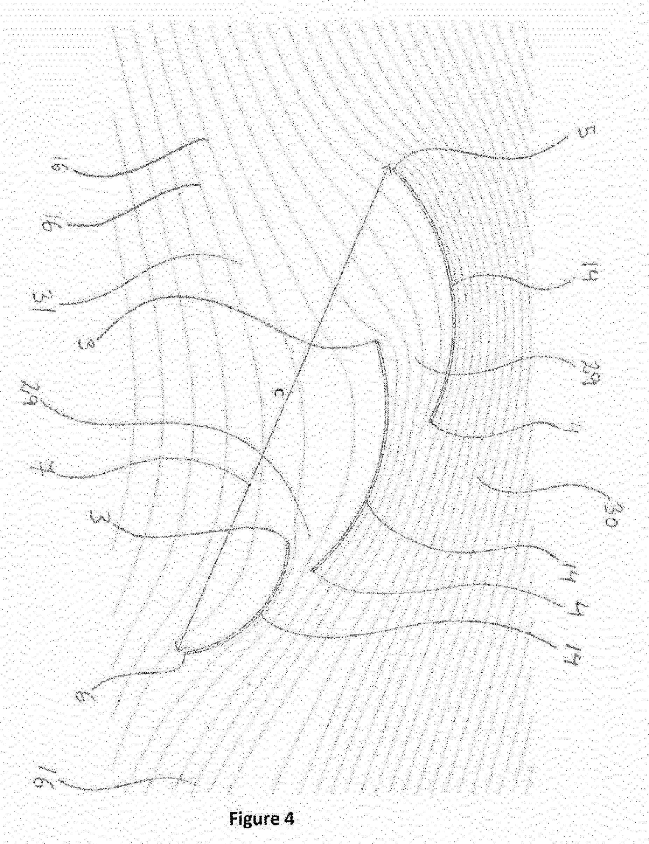

Fig. 4 illustrates a cross section of a present-day conventional trawl door 1, with streamline 16 visualization. The hydrodynamic features of a present-day conventional trawl door 1 are shown in Fig. 4. The imaginary trawl door chord line 7 connects the trawl door leading edge 5 with the trawl door trailing edge 6. Said trawl door chord line 7 is used as reference for defining the relational terms "front", "rear", "upper side", "lower side", "above", "below" as described above.

Each one-sided hydrofoil 14 has a leading edge 3 pointing towards the trawl door leading edge 5 and a hydrofoil trailing edge 4 pointing towards the trawl door trailing edge 6. Hydrodynamic theory dictates that lift force is created by bending the flow. However, one one-sided hydrofoil 14 can only bend the flow by a certain limited angle. Exceeding the limited angle would cause flow separation and stall on the suction side 30. Therefore, positioning of several one-sided hydrofoils 14 in an overlapping sequence one-behind-the-other, such that a narrowing channel 29 is formed between the rear pressure side 31 of the upstream one-sided hydrofoil 14 and the front suction side 30 of the downstream one-sided hydrofoil 14, causes an acceleration of the flow through each of the trawl door channels 29, such that the low pressure is sustained on the trawl door suction side 30 and a high bending of the flow creating high lift force is possible without causing flow separation and stall. The use of this so-called flap-effect for engineering applications is widely used, e.g., in the civil aircraft industry, where leading edge slats and trailing edge flaps are extracted from the main wing during take-off and landing.

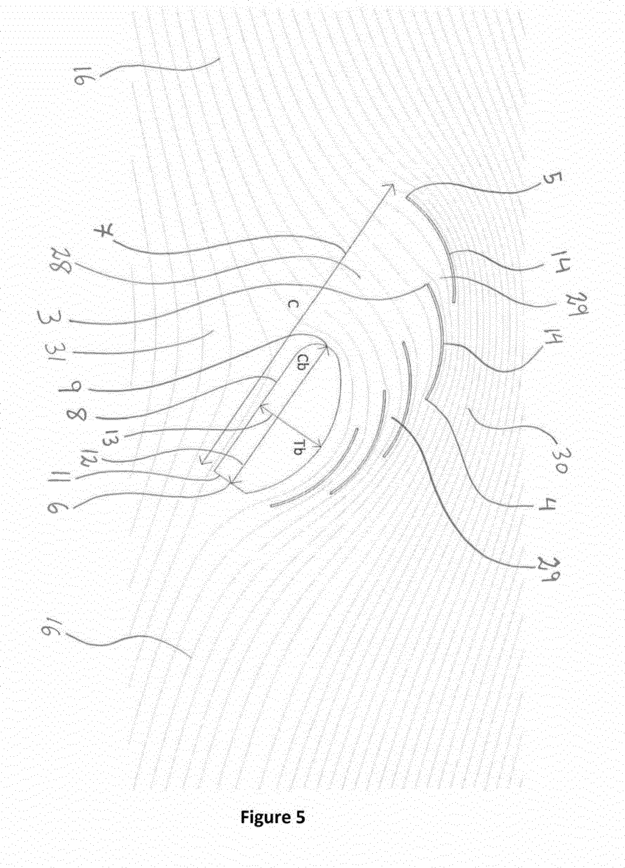

Fig. 5 illustrates a cross section of a trawl door 37 with flow booster 8, with streamline 16 visualization. The hydrodynamic features of a trawl door 37 with flow booster 8 are disclosed in Fig. 5. The introduction of a flow booster 8 in the form of a thick body causing flow displacement, guides the flow into a boosted region 28, from where the flow branches into the conventional trawl door channel flows 29. The flow in the boosted region is pre-accelerated by the flow booster 8. Although the hydrodynamics of the trawl door 37 with flow booster 8 constitute a highly complex coupled fluid flow, it can be conceptually described as a two-stage fluid acceleration process, where the first stage is the flow velocity boosting performed by the flow booster 8 and the final stage is the fluid acceleration through the conventional trawl door channels 29.

The relative increase in the overall lift coefficient from using the flow booster as compared to a present-day conventional trawl door 1 is typically 25-30 %. The flow booster 8 comprises a flow booster leading edge 9, a flow booster truncated trailing edge 11, an imaginary flow booster chord line 12 and an imaginary flow booster thickness line 13. Remaining features of the trawl door include one-sided hydrofoils 14, hydrofoil leading edges 3, hydrofoil trailing edges 4, suction side flow 30 and pressure side flow 31 as described above.

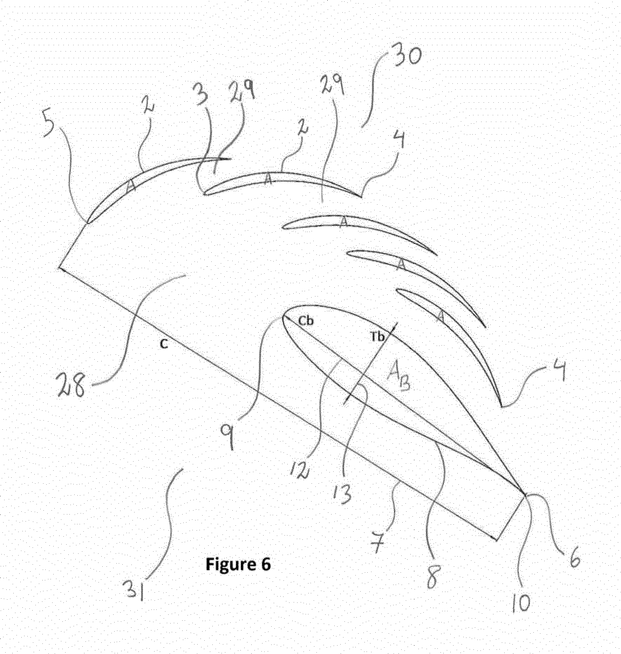

Fig. 6 illustrates a cross section of a trawl door 37 with flow booster 8 comprising a flow booster 8 shaped like a thick hydrofoil and a conventional sequence of five thin hydrofoils 2. In this embodiment of the invention, the flow booster 8 is shaped as a thick hydrofoil with a flow booster leading edge 9 and a flow booster trailing edge 10 and the hydrofoils 2 are shaped as regular slender airfoils. The cross sectional area Ab of the flow booster 8 should be approximately one order of magnitude larger than the cross sectional area A of a hydrofoil 2 or even larger.

Although the disclosed flow booster 8 in Fig. 6 is more streamlined than the flow booster 8 on Fig. 5, the latter actually yields better augmentation of the overall lift coefficient. A flow booster 8 shaped as a thick blunt body obstructs the pressure side flow 31 better, leading to better guidance of the flow into the boosted region 28. Still, an extremely thick blunt body flow booster 8 would cause increased drag forcing and therefore be disadvantageous. Fig. 6 further shows the trawl door leading edge 5, the trawl door trailing edge 6, the hydrofoil leading edges 3, the hydrofoil trailing edges 4, the suction side flow 30, the trawl door channel flows 29 and the imaginary lines for the trawl door chord 7, the flow booster chord 12 and the flow booster thickness 13.

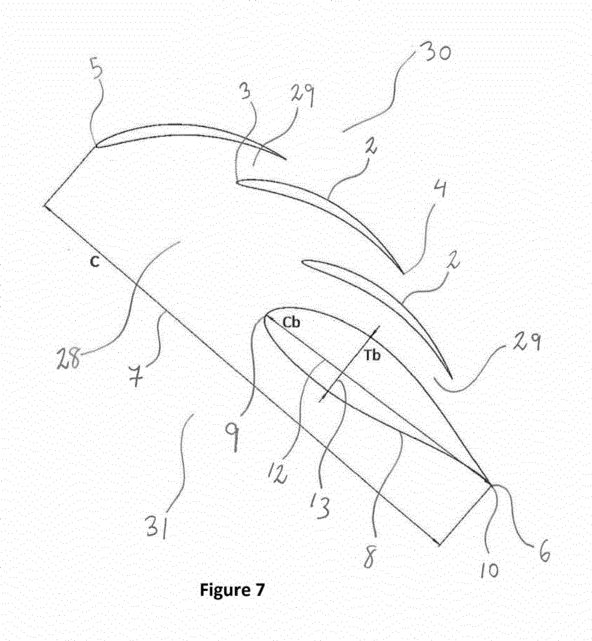

Fig. 7 illustrates a cross section of a trawl door 37 with flow booster 8 comprising a flow booster 8 shaped like a thick hydrofoil and a conventional sequence of three thin hydrofoils 2. In this embodiment of the invention, the flow booster 8 is shaped as a thick hydrofoil with a flow booster leading edge 9 and a flow booster trailing edge 10 and the hydrofoils 2 are shaped as regular slender airfoils.

As illustrated, e.g., in Figs. 6 and 7, the conventional part of the trawl door 1 can comprise different numbers of hydrofoils 2, typically between two and seven. A higher number of hydrofoils 2 would neither be practical nor hydro-dynamically efficient. Note that the same number variation can be performed with one-sided hydrofoils 14 (see for instance Fig. 5) instead of airfoil shaped hydrofoils 2. A mix of one-sided hydrofoils 14 and airfoil shaped hydrofoils 2 can also be used.

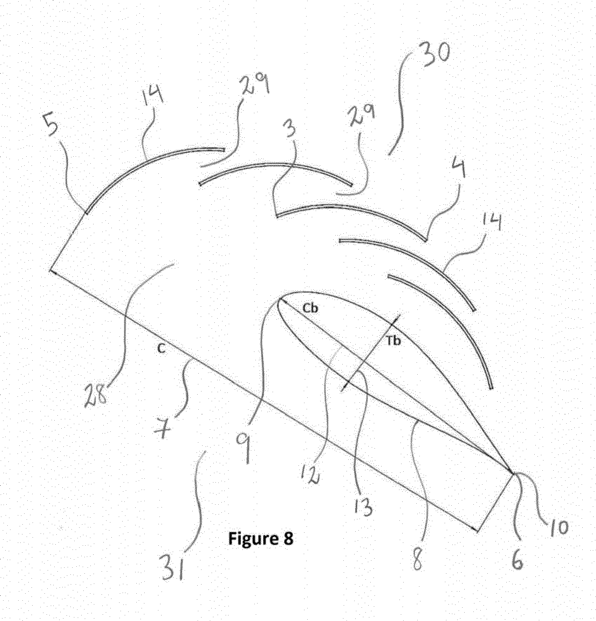

Fig. 8 illustrates a cross section of a trawl door 37 with flow booster 8 comprising a flow booster 8 shaped like a thick hydrofoil and a conventional sequence of five one-sided hydrofoils 14. In this embodiment of the invention, the flow booster 8 is shaped as a thick hydrofoil with a flow booster leading edge 9 and a flow booster trailing edge 10 and the five one-sided hydrofoils 14 are curved plates. The use of the one-sided hydrofoils 14 is hydro-dynamically efficient for low towing velocities and/or small trawl doors, where regular airfoil shaped hydrofoils 2 (see for instance Fig. 6) can be less resistant to premature flow separation and stall. The ease of manufacturing and low cost of the one-sided hydrofoils 14 is also beneficial.

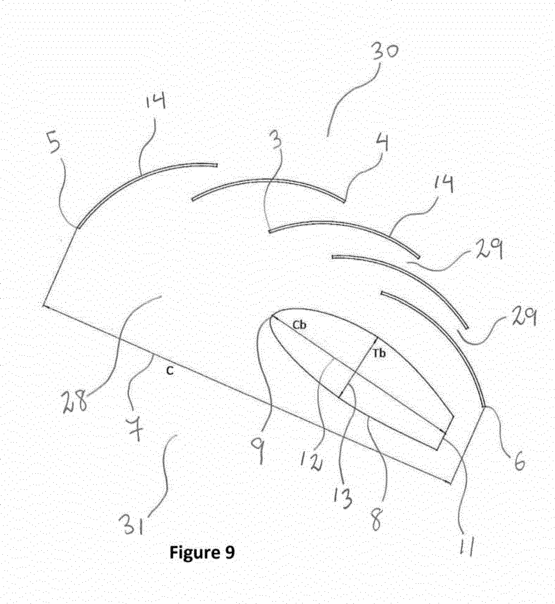

Fig. 9 illustrates a cross section of a trawl door 37 with flow booster 8 comprising a flow booster 8 shaped like a thick non-hydrodynamic bluff body and a conventional sequence of five one-sided hydrofoils 14. In this embodiment of the invention, the flow booster 8 is shaped as a thick hydrofoil with a flow booster leading edge 9 and a flow booster truncated trailing edge 11 and the five one-sided hydrofoils 14 are curved plates. This truncated flow booster trailing edge 11 gives a more bulky shape with better flow displacement capabilities than with a sharp flow booster trailing edge 10 (see for instance Fig. 8), leading to an improved flow pre-acceleration in the flow-boosted region 28. Note that even if the truncation of the flow booster trailing edge 11 only has a neutral impact on the generated lift force, then the lift coefficient will increase, since the flow booster trailing edge 11 truncation yields a reduced trawl door chord line distance C, such that substantially the same lift force is obtained with a more compact trawl door design.

Fig. 10 illustrates the use of a thick non-hydrodynamic bluff body flow booster internal cavity 32 as an applicable volume for a buoyancy element 17 increasing dynamic stability as seen in perspective. In this embodiment of the invention, a buoyancy element 17 is positioned inside the upper cavity 38 of the flow booster 8 in the uppermost spanwise section 20. This buoyancy element 17 provides up-drift to the trawl door 37 with flow booster 8, and since the centre of the buoyancy force from the buoyancy element 17 is placed vertically above the gravity centre of the trawl door 37 with flow booster 8, a stabilizing effect is achieved. The buoyancy element 17 can be a closed shell structure containing ambient air, a noble gas such as helium, vacuum or other. Said buoyancy element 17 can also be made of a light density hard material such as closed-cell foam or similar.

The remaining features shown in Fig. 10 include the one-sided hydrofoils 14 and the spanwise section endplates 15. Some less important features included in other figures, such as structural stiffeners 36, attachment brackets 26 and attachment holes 27, have been omitted for clarity.

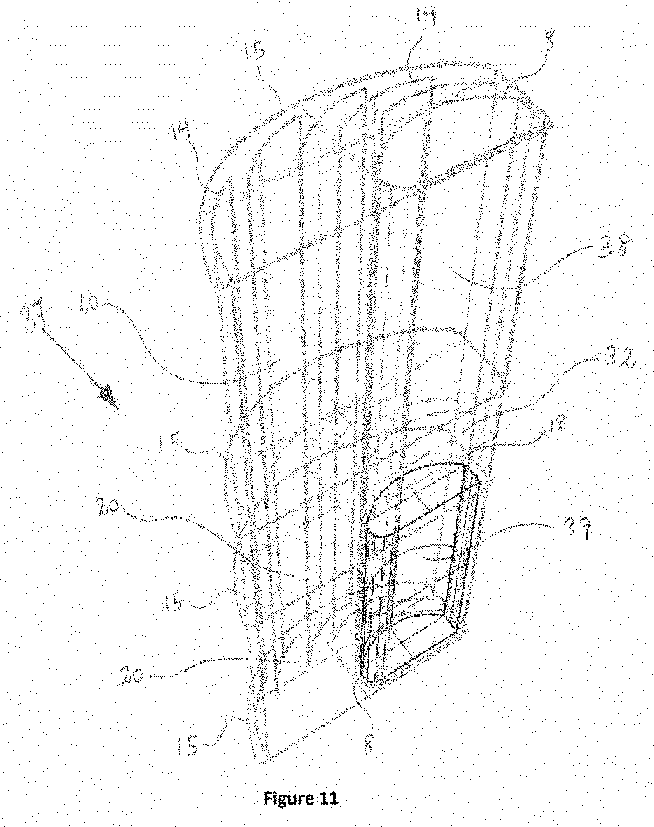

Fig. 11 illustrates the use of a thick non-hydrodynamic bluff body flow booster internal cavity 32 as an applicable volume for a gravity element 18 increasing dynamic stability as seen in perspective. In this embodiment of the invention, a gravity element 18 is positioned inside the lower cavity 39 of the flow booster 8 in the lowermost spanwise section 20. This gravity element 18 provides down-force to the trawl door 37 with flow booster 8 and since the centre of the gravity force from the gravity element 18 is placed vertically below the gravity centre of the trawl door 37 with flow booster 8, a stabilizing effect is achieved. The gravity element 18 can be a shell structure containing metallic material, stone/rock-based material, concrete, high-density foam or rubber or similar.

The remaining features shown in Fig. 11 include the one-sided hydrofoils 14 and the spanwise section endplates 15. Some less important features included in other figures, such as structural stiffeners 36, attachment brackets 26 and attachment holes 27, have been omitted for clarity.

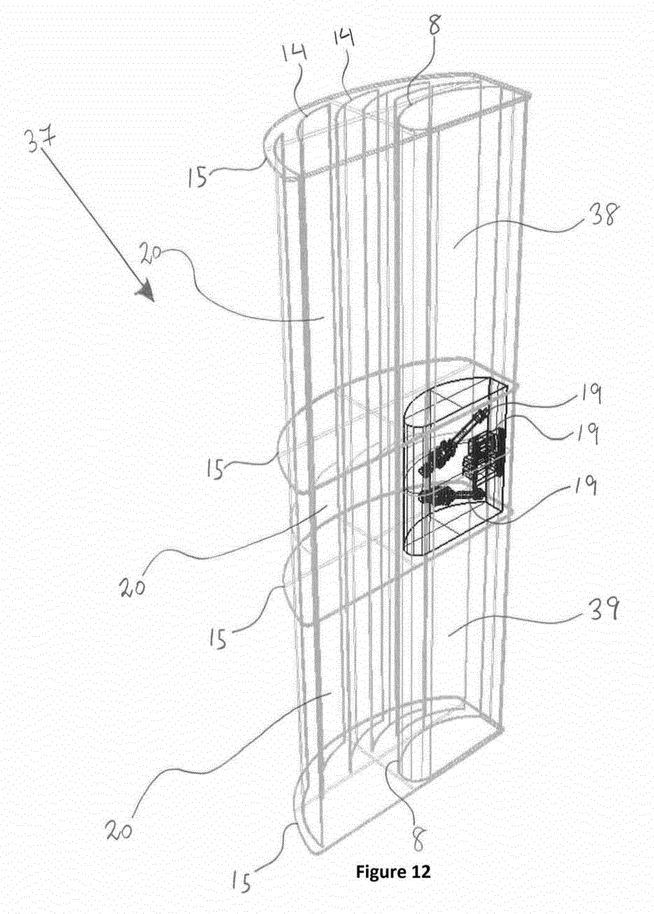

Fig. 12 illustrates the use of a thick non-hydrodynamic bluff body flow booster internal cavity 32 as an applicable volume for technical equipment 19 as seen in perspective. In this embodiment of the invention, technical equipment 19 is positioned inside the hollow cavity of the flow booster 8 in one of the spanwise sections 20. Positioning the technical equipment 19 inside the flow booster 8 provides physical protection against fluid flow forces, optionally seabed impact, and impact from the towing vessel hull when hauling in the trawl doors 37. Apart from shielding the equipment, it is also advantageous from a fluid dynamics perspective to place the technical equipment 19, such that it does not deteriorate the hydrodynamic lift-force-providing capability of the trawl door 37 with flow booster 8. This is achieved by placing the technical equipment inside the cavity of a flow booster 8. The technical equipment 19 can be actuators, sensors, signal transmitters, power-storage devices, power-generating devices, force or moment transmission devices or other. The remaining features shown in Fig. 12 include the one-sided hydrofoils 14 and the spanwise section endplates 15. Some less important features have been omitted for clarity.

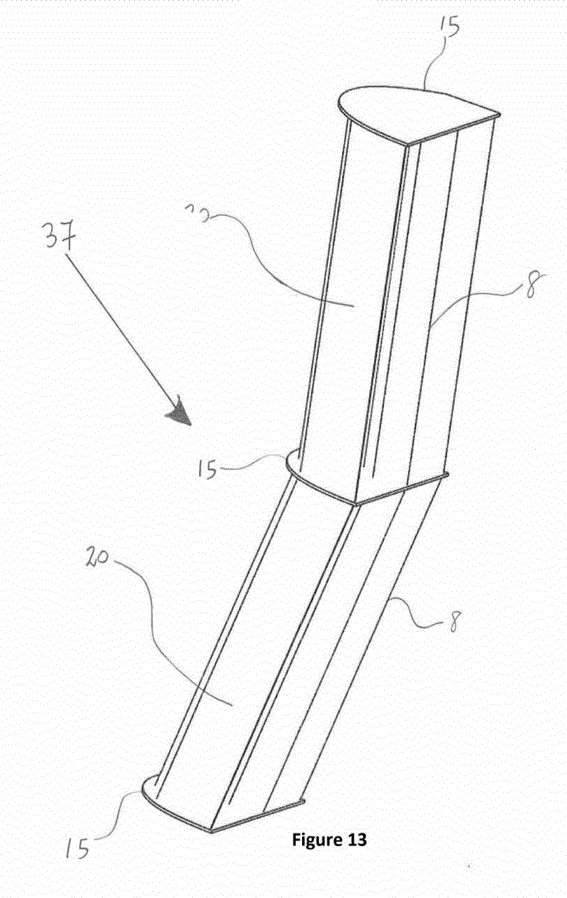

Fig. 13 illustrates a trawl door 37 with flow booster 8 comprising two spanwise angled sections 20 as seen in perspective. In this embodiment of the invention, the two spanwise sections 20 are angled relative to the shared spanwise section endplate 15.

The angling applies to all parts of the spanwise sections 20, i.e. the flow booster 8 and the one-sided hydrofoils 14. Airfoil shaped hydrofoils 2 could also be used.

As a result of this angling, the trawl door 37 with flow booster 8 will bend slightly back towards the upper and lower trawl door spanwise ends in the direction of the generated lift force. This angling of the spanwise sections 20 slightly improves the dynamic stability of the trawl door. Furthermore, if used for bottom trawling, the angling will prevent a trawl door from falling flat on the seabed, e.g., if towing velocity drops to zero, and will, once towing is resumed, erect itself when towed. In addition, an angled trawl door 37 with flow booster 8 will easier lock itself into a fixed position adjacent to the rear end of the vessel hull when hauled in.

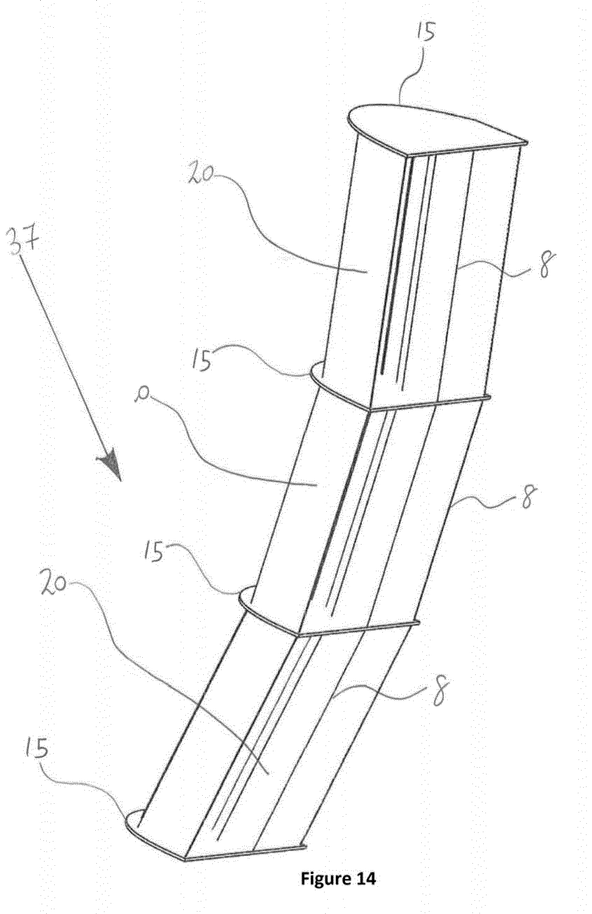

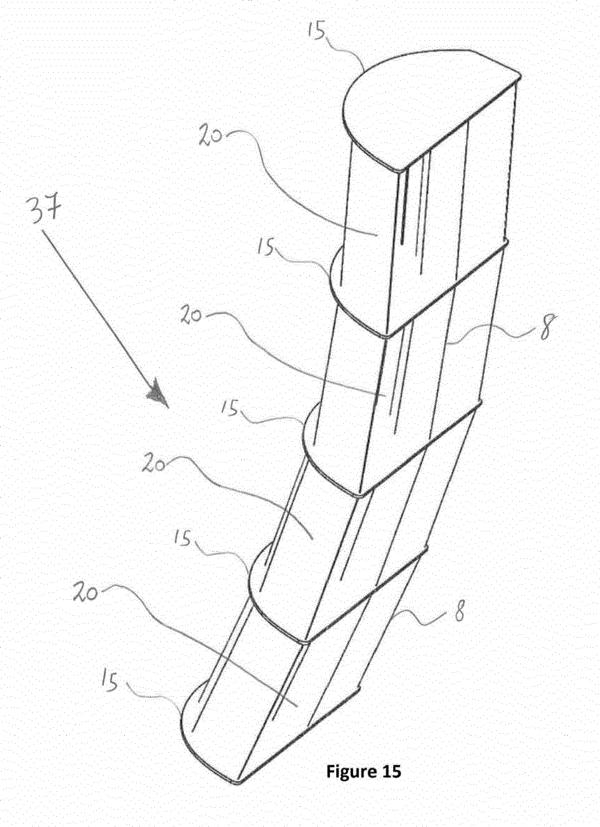

Fig. 14 illustrates a trawl door 37 with flow booster 8 comprising three spanwise angled sections 20 as seen in perspective and Fig. 15 illustrates a trawl door 37 with flow booster 8 comprising four spanwise angled sections 20 as seen in perspective. In these embodiments of the invention, multiple spanwise sections 20 are angled relative to their respective shared spanwise section endplate 15. Multiple, i.e. three or four, angled spanwise sections 20 can be preferable for high aspect ratio trawl doors 37 with flow booster 8, where the trawl door height-to-chord ratio is higher than 2.5. Each angling between two adjacent spanwise sections 20 need not be the same, although identical anglings are often preferred in order to simplify the one-sided hydrofoil 14 and flow booster 8 plate cutting and trawl door assembly during manufacturing.

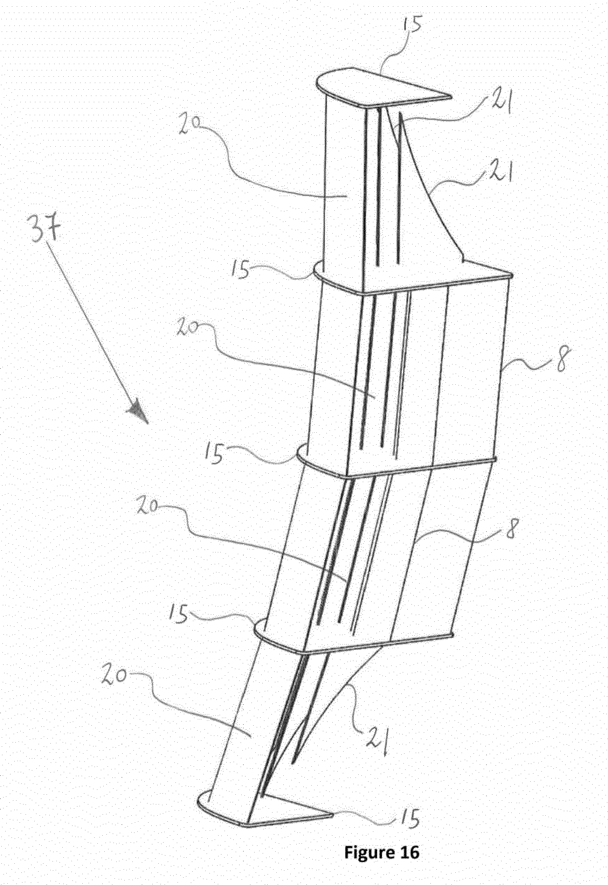

Fig. 16 illustrates a trawl door 37 with flow booster 8 with spanwise tapered hydrofoils 21 and with a flow booster 8 comprising only two of the four spanwise angled sections 20 as seen in perspective. In this embodiment of the invention, spanwise geometry variation is applied through tapering of some of the one-sided hydrofoils 14 towards the upper and lower spanwise ends of the trawl door 37 with flow booster 8. Spanwise tapering of lift force generating bodies is commonly used, e.g., in the aircraft industry.

The tapering causes a gradual release of the so-called "bound vorticity", such that the hydrodynamic loading of the trawl door 37 with flow booster 8 gradually decreases towards the spanwise ends. The hydrodynamic advantage of the gradual unloading is the reduction of the induced drag, which is by far the dominating drag source for very low aspect ratio wings such as trawl doors. Hence, induced drag minimization is achieved through lift force reduction towards the spanwise ends, which geometrically can be achieved through tapered hydrofoils 21. The lift force reduction towards the spanwise ends can also be achieved through angular twisting of one or multiple hydrofoils or by discontinuation of one or multiple hydrofoils. The discontinuation of the flow booster 8 outside the two spanwise section endplates 15 adjacent to the two central spanwise sections 20 is an example of such lift force reduction towards the spanwise ends through spanwise discontinuation.

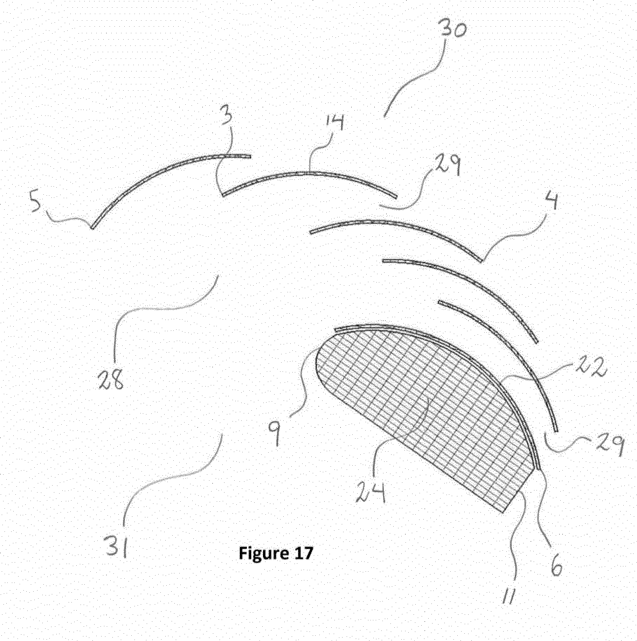

Fig. 17 illustrates a cross section of a trawl door 37 with flow booster 8 comprising an upper one-sided flow-boosting part 22 and a cavity volume fill 24 below. In this embodiment of the invention, the use of structural stiffness providing plate material, typically high performance steel, has been reduced, such that the flow booster 8 consists structurally of an upper one-sided flow-boosting part 22 and a softer material cavity volume fill 24. This cavity volume fill 24 occupies the space that would otherwise have been occupied by a fully steel-structured flow booster 8, such that the hydrodynamic performance is identical. The advantages of applying a structurally upper one-sided flow-boosting part 22 with a cavity volume fill 24 are ease of manufacturing and cost reduction. It should be noted that the cavity fill can serve the purpose of a buoyancy element or a gravity element as disclosed in Figs. 10-11. Also, note that the cavity fill can be made of a semi-hard smooth abrasion-resistant material, e.g., polyurethane that is well suited for seabed impact and soft interaction with the rear part of the vessel hull when hauled in for non-operation.

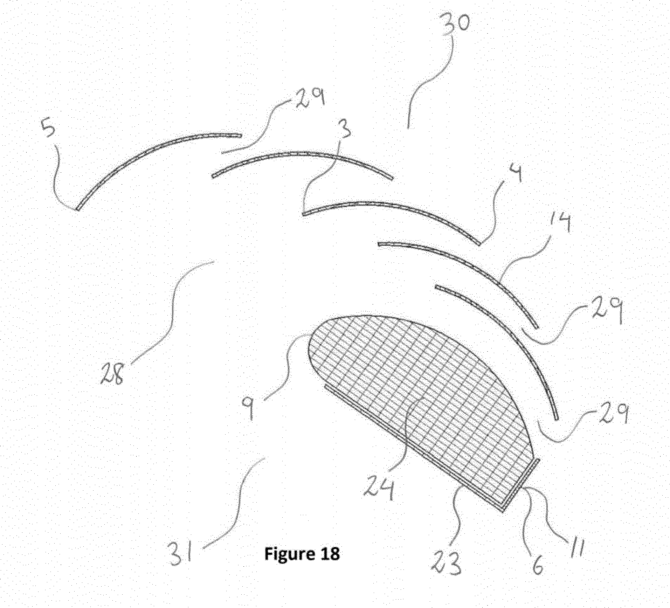

Fig. 18 illustrates a cross section of a trawl door 37 with flow booster 8, comprising. a lower one-sided flow-boosting part 23 and a cavity volume fill 24 above. In this embodiment of the invention, use of structural stiffness providing plate material, typically high performance steel, has been reduced, such that the flow booster consists of a structurally lower one-sided flow-boosting part 23 and a softer material cavity volume fill 24. This cavity volume fill 24 occupies the space that would otherwise have been occupied by a fully steel-structured flow booster 8, such that the hydrodynamic performance is identical. The advantages of applying a structurally lower one-sided flow booster 23 with a cavity volume fill 24 are ease of manufacturing and cost reduction. It should be noted that the cavity fill can serve the purpose of a buoyancy element or a gravity element as disclosed in Figs. 10-11.

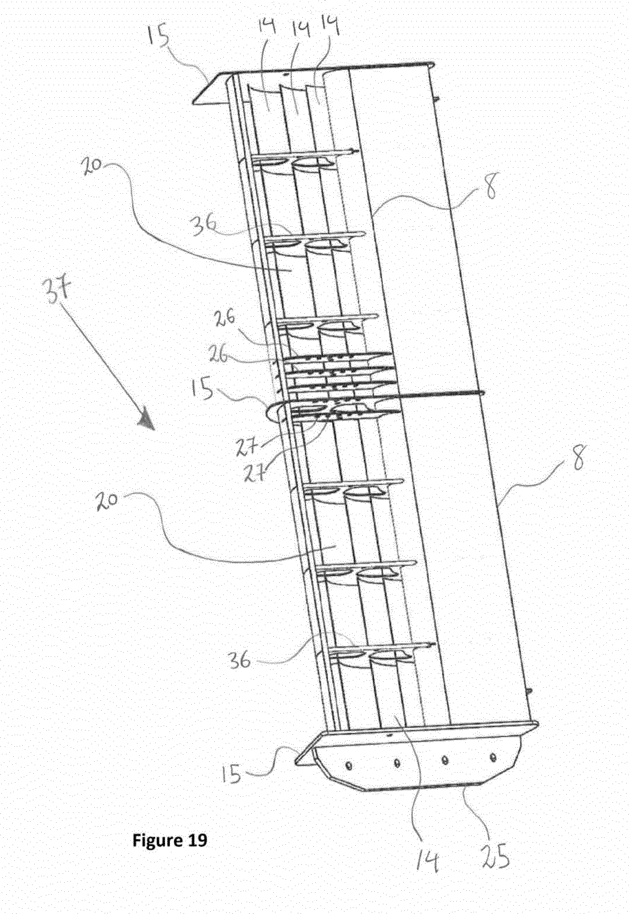

Fig. 19 illustrates a trawl door 37 with flow booster 8 and a trawl door keel 25 for use on the seabed (bottom trawl) as seen in perspective. In this embodiment of the invention, seabed operation is required. The trawl door 37 with flow booster 8 will then not be for pelagic use, but for semi-pelagic and bottom trawl use only. This trawl door 37 with flow booster 8 can have any of the characteristics from the preceding Figs. 3 and 5-18 but with the additional feature of a trawl door keel 25. The remaining features shown in Fig. 19 have all been earlier described, e.g., in the description of Fig. 3.

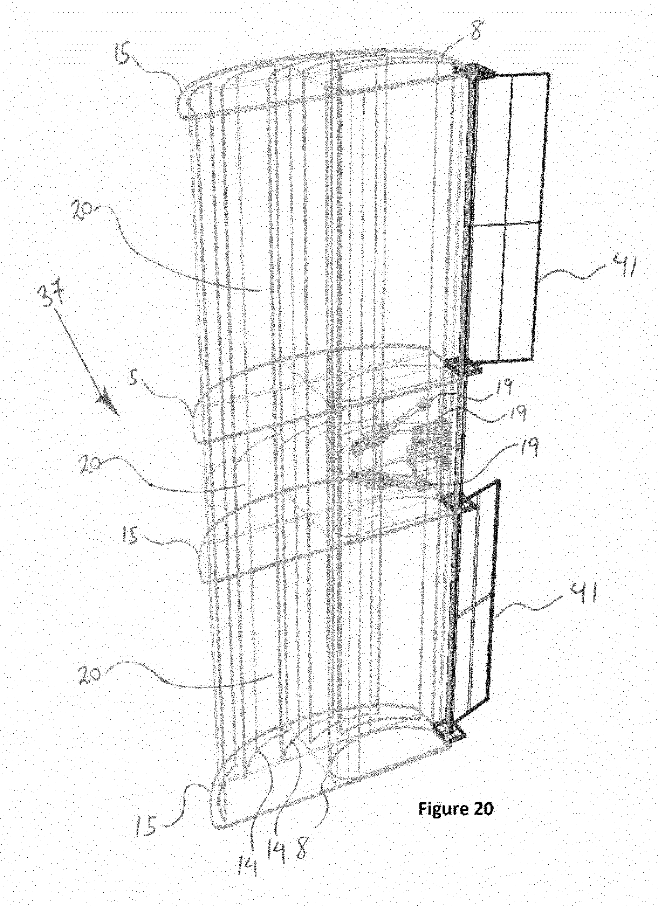

Fig. 20 illustrates a trawl door 37 with flow booster 8 with actively individually controllable hydrodynamic trawl door flaps 41 as seen in perspective. In this embodiment of the invention, positional control and/or improved hydrodynamic stability of the trawl door 37 with flow booster 8 is achieved by the controllable trawl door flaps 41. These flaps can be pitched around their hinge axis by the technical equipment 19 (actuator rods, power supply, etc.). Said technical equipment 19 is positioned within the spanwise section 20 located centrally but could also have been positioned in the lower or upper of the three spanwise sections 20. These spanwise sections 20 each attach to a section endplate 15 in both ends. The remaining features shown in Fig. 20 include one-sided hydrofoils 14 and flow boosters 8.

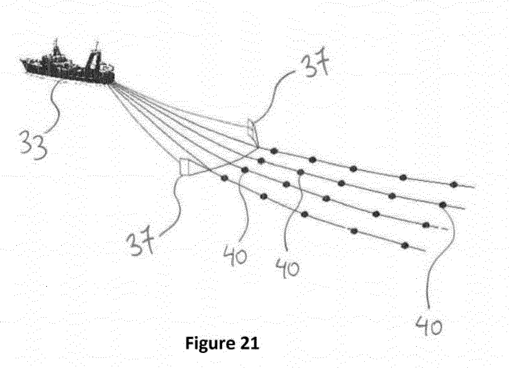

Fig. 21 illustrates a pair of trawl doors 37 with flow boosters 8 in operation, being towed through the water by a towing vessel 33 and connected to a downstream seismic equipment for seabed measurements 40. This pair of trawl doors 37 with flow boosters 8 generates the hydrodynamic outwards directed lift forces that causes the lateral spread of the seismic equipment for seabed measurements 40. The magnitude of the lift forces determines how large an array of seismic equipment for seabed measurements 40 can be efficiently towed. Trawl doors 37 with flow boosters 8 with higher lift-generating capacity will enable the use of a larger array of seismic equipment for seabed measurements 40, thereby speeding up the measurement process and lead time for further seabed exploration.

The invention has been exemplified above with reference to specific examples of designs and embodiments of flow boosters 8, trawl doors 37 with flow boosters 8, integrated use with present-day conventional trawl doors 1, etc. It should be understood, however, that the invention is not limited to the particular examples described above but may be designed and altered in a multitude of varieties within the scope of the invention as specified in the claims.

### List of references

- 1.: Present-day conventional trawl door
- 2.: Hydrofoil
- 3.: Hydrofoil leading edge
- 4.: Hydrofoil trailing edge
- 5.: Trawl door leading edge
- 6.: Trawl door trailing edge
- 7.: Trawl door chord line
- 8.: Flow booster
- 9.: Flow booster leading edge
- 10.: Flow booster trailing edge
- 11.: Flow booster truncated trailing edge
- 12.: Flow booster chord line
- 13.: Flow booster thickness line
- 14.: Hydrofoil plate "one-sided" element
- 15.: Spanwise section endplate
- 16.: Streamlines (for purpose of flow visualization only)
- 17.: Flow booster internal cavity buoyancy element
- 18.: Flow booster internal cavity gravity element
- 19.: Flow booster internal cavity technical equipment
- 20.: Spanwise section
- 21.: Tapered hydrofoil
- 22.: Upper one-sided flow-boosting part
- 23.: Lower one-sided flow-boosting part
- 24.: Cavity volume fill
- 25.: Trawl door keel
- 26.: Attachment bracket
- 27.: Attachment holes
- 28.: Flow-boosted region
- 29.: Trawl door channel flow
- 30.: Suction side flow
- 31.: Pressure side flow
- 32.: Flow booster internal cavity
- 33: Towing vessel
- 34: Trawl door
- 35: Trawl
- 36: Structural stiffener
- 37: Trawl door with flow booster
- 38: Flow booster upper internal cavity
- 39: Flow booster lower internal cavity
- 40: Seismic equipment for seabed measurements
- 41: Trawl door flap
- C.: Trawl door chord line distance
- Cb.: Flow booster chord line distance
- Tb.: Flow booster thickness line distance
- A.: Cross-sectional area of hydrofoil
- Ab.: Cross-sectional area of flow booster

## Claims

1. A trawl door (37) comprising an overlapping sequence of several very slender hydrofoils (2, 14) forming channels (29) between them, **characterised in that**
the trawl door (37) further comprises a flow booster (8) shaped as a thick hydrofoil with a leading edge (9) and a trailing edge (10) and an internal cavity (32) comprising a spanwise upper internal cavity (38) and a spanwise lower internal cavity (39), the flow booster (8) being aerodynamically inefficient on its own with a bulky relative thickness, i.e. ratio between the thickness line distance (Tb) and the chord line distance (Cb), larger than 24 %, and
the flow booster (8) being positioned substantially below the rear part of the overlapping sequence of hydrofoils (2, 14), in such a way that
the flow booster (8) forms a structurally connected integrated part to the hydrofoils (2,14), and the flow booster (8) impacts the upstream flow forcing it into a velocity boosted region (28) upstream of the flow booster (8) and to the pressure side (31) of the overlapping sequence of hydrofoils (2, 14), such that the flow is pre-accelerated prior to running through the channels (29) between the hydrofoils (2, 14).

2. The trawl door (37) according to claim 1, wherein the flow booster trailing edge is truncated (11).

3. The trawl door (37) according to any of the preceding claims, wherein the relative thickness (Tb/Cb) is larger than 35%, such that the thick hydrofoil shape is not aerodynamically efficient regarded as an individual foil.

4. The trawl door (37) according to any of the preceding claims, wherein a buoyancy element (17) is positioned in the upper internal cavity (38).

5. The trawl door (37) according to any of the preceding claims, wherein a gravity element (18) is positioned in the lower internal cavity (39).

6. The trawl door (37) according to any of the preceding claims, wherein technical equipment (19) for control of the trawl door is positioned inside the internal cavity (32).

7. The trawl door (37) according to any of the preceding claims, wherein one or more spanwise section endplates (15) connect on each side to a spanwise section (20), such that the spanwise sections are angled in relation to each other.

8. The trawl door (37) according to any of the preceding claims, wherein the flow boosting part consists of the upper side (22) of the flow booster only and a structurally less rigid material is used as volume fill below (24).

9. The trawl door (37) according to any of claims 1-7, wherein the flow boosting part consists of the lower side (23) of the flow booster only and a structurally less rigid material is used as volume fill above (24).

10. The trawl door (37) according to any of the preceding claims, wherein the cross-sectional area (Ab) of the flow booster (8) is at least one order of magnitude larger than the cross-sectional areas (A) of each of the hydrofoils (2, 14), the flow booster chord line distance (Cb) is less than 80 %, preferably less than 65 %, of the overall trawl door chord line distance (C), and
the several hydrofoils are one-sided (14).

11. The trawl door (37) according to claim 10, wherein a keel (25) is attached to the bottom of the trawl door for bottom trawling use on the seabed.

12. The trawl door (37) according to claim 10 or 11, wherein the trawl door is arranged so that the translational and/or angular position of the trawl door can be actively controlled from a towing vessel (33) through use of pitching hydrodynamic surfaces, such as trawl door flaps (41) or similar.

13. The trawl door (37) according to any of claims 10-12, wherein the trawl door is arranged so that the dynamic stability of the trawl door can be actively controlled from a towing vessel (33) through use of pitching hydrodynamic surfaces, such as trawl door flaps (41) or similar.

14. The trawl door (37) according to any of claims 10-13, wherein one or more of the hydrofoils (2) of the trawl door are manufactured by moulding in a lightweight material such as plastic or rubber.

15. The use of a trawl door (37) according to any of the claims 10-14 for trawl fishing with a trawl net.

16. The use of a trawl door (37) according to any of claims 10-14 for towing seismic equipment for seabed measurements (40) for measuring the seabed composition.

## Patentansprüche

1. Schleppnetztür (37), die eine überlappende Abfolge von mehreren sehr schlanken Tragflügeln (2, 14) umfasst, die Kanäle (29) zwischen sich bilden,
**dadurch gekennzeichnet, dass**
die Schleppnetztür (37) ferner einen Strömungsverstärker (8) umfasst, der als ein dicker Tragflügel mit einer Vorderkante (9) und einer Hinterkante (10) und einem inneren Hohlraum (32), welcher einen oberen inneren Spannweitenhohlraum (38) und einen unteren inneren Spannweitenhohlraum (39) umfasst, geformt ist,
wobei der Strömungsverstärker (8) allein mit einer voluminösen relativen Dicke, d. h. einem Verhältnis zwischen dem Dickenlinienabstand (Tb) und dem Sehnenlinienabstand (Cb) von mehr als 24 %, aerodynamisch unwirksam ist und
der Strömungsverstärker (8) im Wesentlichen unterhalb des hinteren Teils der überlappenden Abfolge von Tragflügeln (2, 14) derart angeordnet ist, dass
der Strömungsverstärker (8) mit den Tragflügeln (2, 14) ein baulich strukturell verbundenes integriertes Teil bildet, und
der Strömungsverstärker (8) auf den stromaufwärtigen Strom wirkt und ihn in einen geschwindigkeitsverstärkten Bereich (28) stromaufwärts des Strömungsverstärkers (8) und zur Druckseite (31) der überlappenden Abfolge von Tragflügeln (2, 14) drängt, sodass die Strömung vordem Durchlaufen der Kanäle (29) zwischen den Tragflügeln (2, 14) vorbeschleunigt wird.

2. Schleppnetztür (37) nach Anspruch 1, wobei die Hinterkante des Strömungsverstärkers verkürzt (11) ist.

3. Schleppnetztür (37) nach einem der vorstehenden Ansprüche, wobei die relative Dicke (Tb/Cb) größer als 35 % ist, sodass die dicke Tragflügelform als einzelner Flügel nicht aerodynamisch wirksam betrachtet wird.

4. Schleppnetztür (37) nach einem der vorstehenden Ansprüche, wobei ein Auftriebselement (17) in dem oberen inneren Hohlraum (38) angeordnet ist.

5. Schleppnetztür (37) nach einem der vorstehenden Ansprüche, wobei ein Schwerkraftelement (18) in dem unteren inneren Hohlraum (39) angeordnet ist.

6. Schleppnetztür (37) nach einem der vorstehenden Ansprüche, wobei eine technische Ausrüstung (19) zur Steuerung der Schleppnetztür innerhalb des inneren Hohlraums (32) angeordnet ist.

7. Schleppnetztür (37) nach einem der vorstehenden Ansprüche, wobei eine oder mehrere Spannweitenendplatten (15) auf jeder Seite mit einem Spannweitenabschnitt (20) verbunden sind, sodass die Spannweitenabschnitte in Bezug zueinander abgewinkelt sind.

8. Schleppnetztür (37) nach einem der vorstehenden Ansprüche, wobei das Strömungsverstärkungsteil nur aus der Oberseite (22) des Strömungsverstärkers besteht und unterhalb ein strukturell weniger steifes Material als Volumenfüllung (24) verwendet wird.

9. Schleppnetztür (37) nach einem der Ansprüche 1 bis 7, wobei das Strömungsverstärkungsteil nur aus der Unterseite (23) des Strömungsverstärkers besteht und oberhalb ein strukturell weniger steifes Material als Volumenfüllung (24) verwendet wird.

10. Schleppnetztür (37) nach einem der vorstehenden Ansprüche, wobei
die Querschnittsfläche (Ab) des Strömungsverstärkers (8) mindestens eine Größenordnung größer als die Querschnittsflächen (A) jeder der Tragflügeln (2, 14) ist,
der Sehnenlinienabstand des Strömungsverstärkers (Cb) kleiner als 80 %, vorzugsweise kleiner als 65 % des Gesamt-Sehnenlinienabstands der Schleppnetztür (C) ist, und
die mehreren Tragflügel einseitig (14) sind.

11. Schleppnetztür (37) nach Anspruch 10, wobei ein Kiel (25) an der Unterseite der Schleppnetztür zur Verwendung als Grundschleppnetz an dem Meeresboden angebracht ist.

12. Schleppnetztür (37) nach Anspruch 10 oder 11, wobei die Schleppnetztür so angeordnet ist, dass die Translations- und/oder Winkelposition der Schleppnetztür von einem Schleppschiff (33) unter Verwendung von abwerfenden hydrodynamischen Oberflächen wie Schleppnetztürklappen (41) oder ähnlichem aktiv gesteuert werden kann.

13. Schleppnetztür (37) nach einem der Ansprüche 10 bis 12, wobei die Schleppnetztür so angeordnet ist, dass die dynamische Stabilität der Schleppnetztür von einem Schleppschiff (33) unter Verwendung von abwerfenden hydrodynamischen Oberflächen wie Schleppnetztürklappen (41) oder ähnlichem aktiv gesteuert werden kann.

14. Schleppnetztür (37) nach einem der Ansprüche 10 bis 13, wobei eine oder mehrere der Tragflügel (2) der Schleppnetztür durch Gießen in ein Leichtgewichtmaterial wie Kunststoff oder Gummi hergestellt sind.

15. Verwendung einer Schleppnetztür (37) nach einem der Ansprüche 10 bis 14 zum Schleppnetzfischen mit einem Schleppnetz.

16. Verwendung einer Schleppnetztür (37) nach einem der Ansprüche 10 bis 14 zum Schleppen seismischer Ausrüstung für Meeresbodenmessungen (40) zum Messen der Meeresbodenzusammensetzung.

## Revendications

1. Panneau de chalut (37) comprenant une séquence en chevauchement de plusieurs ailes portantes (2, 14) très fines formant des canaux (29) entre elles,
**caractérisé en ce que**
le panneau de chalut (37) comprend en outre un amplificateur de flux (8) façonné comme une aile portante épaisse, pourvue d'un bord d'attaque (9) et d'un bord de fuite (10) et d'une cavité interne (32) comprenant une cavité interne supérieure (38) dans le sens de l'envergure et une cavité interne inférieure (39) dans le sens de l'envergure,
l'amplificateur de flux (8) étant aérodynamiquement inefficace à lui seul; présentant une épaisseur relative encombrante, c'est-à-dire un rapport entre la distance de ligne d'épaisseur (Tb) et la distance de ligne de corde (Cb), supérieur à 24 % et
l'amplificateur de flux (8) étant positionné sensiblement sous la partie arrière de la séquence en chevauchement des ailes portantes (2, 14) de manière telle que
l'amplificateur de flux (8) forme une partie intégrée reliée structurellement aux ailes portantes (2, 14) et
l'amplificateur de flux (8) influence le flux en amont en le forçant dans une région à vitesse accélérée (28) en amont de l'amplificateur de flux (8) et vers le côté pression (31) de la séquence en chevauchement des ailes portantes (2, 14), de telle sorte que le flux soit pré-accéléré avant son passage à travers les canaux (29) entre les ailes portantes (2, 14).

2. Panneau de chalut (37) selon la revendication 1, le bord de fuite de l'amplificateur de flux étant tronqué (11).

3. Panneau de chalut (37) selon l'une quelconque des revendications précédentes, l'épaisseur relative (Tb/Cb) étant supérieure à 35 %, de telle sorte que la forme de l'aile portante épaisse ne soit pas aérodynamiquement efficace lorsqu'elle est considérée en tant qu'aile individuelle.

4. Panneau de chalut (37) selon l'une quelconque des revendications précédentes, un élément de flottabilité (17) étant positionné dans la cavité interne supérieure (38).

5. Panneau de chalut (37) selon l'une quelconque des revendications précédentes, un élément de gravité (18) étant positionné dans la cavité interne inférieure (39).

6. Panneau de chalut (37) selon l'une quelconque des revendications précédentes, l'équipement technique (19) pour la commande du panneau de chalut étant positionné à l'intérieur de la cavité interne (32).

7. Panneau de chalut (37) selon l'une quelconque des revendications précédentes, une ou plusieurs plaques d'extrémité (15) de section dans le sens de l'envergure se reliant de chaque côté à une section (20) dans le sens de l'envergure, de sorte que les sections dans le sens de l'envergure forment un coude l'une avec l'autre.

8. Panneau de chalut (37) selon l'une quelconque des revendications précédentes, la partie d'amplification de flux étant constituée par le côté supérieur (22) de l'amplificateur de flux uniquement et un matériau structurellement moins rigide étant utilisé comme remplissage de volume en dessous (24).

9. Panneau de chalut (37) selon l'une quelconque des revendications 1-7, la partie d'amplification de flux étant constituée par le côté inférieur (23) de l'amplificateur de flux uniquement et un matériau structurellement moins rigide étant utilisé comme remplissage de volume au-dessus (24).

10. Panneau de chalut (37) selon l'une quelconque des revendications précédentes,
l'aire en coupe transversale (Ab) de l'amplificateur de flux (8) étant plus grande d'au moins un ordre de grandeur que les aires en coupe transversale (A) de chacune des ailes portantes (2, 14),
la distance de ligne de corde (Cb) de l'amplificateur de flux représentant moins de 80 %, de préférence moins de 65 %, de la distance de ligne de corde (C) du panneau de chalut global et
les différentes ailes portantes étant de type monoface (14).

11. Panneau de chalut (37) selon la revendication 10, une quille (25) étant fixée au fond du panneau de chalut pour une utilisation de chalutage de fond sur le fond de la mer.

12. Panneau de chalut (37) selon la revendication 10 ou 11, le panneau de chalut étant agencé de manière telle que la position de translation et/ou angulaire du panneau de chalut peut être commandée activement d'un bateau de remorquage (33) via l'utilisation de surfaces hydrodynamiques de tangage, telles que des ailerons (41) de panneau de chalut ou similaires.

13. Panneau de chalut (37) selon l'une quelconque des revendications 10-12, le panneau de chalut étant agencé de manière telle que la stabilité dynamique du panneau de chalut peut être commandée activement d'un bateau de remorquage (33) via l'utilisation de surfaces hydrodynamiques de tangage, telles que des ailerons (41) de panneau de chalut ou similaires.

14. Panneau de chalut (37) selon l'une quelconque des revendications 10-13, une ou plusieurs des ailes portantes (2) du panneau de chalut étant fabriquée(s) par moulage en un matériau léger tel que le plastique ou le caoutchouc.

15. Utilisation d'un panneau de chalut (37) selon l'une quelconque des revendications 10-14 pour la pêche au chalut à l'aide d'un chalut.

16. Utilisation d'un panneau de chalut (37) selon l'une quelconque des revendications 10-14 pour le remorquage d'équipements sismiques pour des mesures de fond marin (40) en vue de mesurer la composition du fond marin.
